# EUROPEAN PATENT APPLICATION

(11) **EP 1 906 619 A2**
(43) Date of publication of application: **02.04.2008**
(21) Application number: 07016183.1
(22) Date of filing: 17.08.2007
(51) Int. Cl.: H04L 29/06

(54) **Authentication apparatus and method in wireless mesh network**

(30) Priority: 28.09.2006 KR 20060094997
(71) Applicant: Samsung Electronics Co., Ltd., Suwon-si, Gyeonggi-Do (KR)
(72) Inventor: Lee, Yong, Gangnam-gu (KR); Choi, Wook, Hwaseong-si Gyeonngi-do (KR); Choi, Hyo-Hyun, Oksu-dong Seongdong-gu Seoul (KR); Park, Yong-Seok, Seongnam-si Gyeonggi-do (KR)
(74) Representative: Lang, Johannes

(57) **Abstract**

In an authentication apparatus and an authentication method for nodes in a wireless mesh network, an authentication server performs an initial authentication process for a new node entering the wireless mesh network, and a hop-by-hop authentication process between the new node and an adjacent node is performed between the new and adjacent nodes, based upon authentication information provided from the server. As a result, the server need not be involved in the hop-by-hop authentication process. Also, the initial authentication process for the new node is performed quickly, and the problem of hop-by-hop authentication associated with authentication information sharing is overcome. Furthermore, it is possible to prevent any malicious node from entering the wireless mesh network.

## Description

### BACKGROUND OF THE INVENTION

### Technical Field

The present invention relates to an authentication apparatus and an authentication method in a wireless mesh network.

### Related Art

To date, wireless networks have been gaining more attention in response to the development of network technologies and subscriber demands for better quality of service.

In the wireless networks, wireless mesh networks will be distributed explosively due to increasing demand for the integration of *ad hoc* networks with existing networks.

In such a wireless mesh network, a plurality of nodes are wirelessly connected in a mesh-like structure.

Nodes of the wireless mesh network are generally divided into mesh nodes composing the network and a master node connected to a different network (e.g., a wireless network or another mesh network) so as to function as a gateway.

The mesh nodes may be connected together in a multi-hop mesh structure, and the master node may be connected to an Authentication Server (AS) functioning to authenticate the mesh nodes when they enter the network.

For the mesh nodes of the wireless mesh network to act as a node in the wireless mesh network, two authentication stages are required, i.e., initial authentication for discerning whether or not the nodes are verified, and hop-by-hop authentication for guaranteeing the mutual reliability of the mesh nodes.

The mesh nodes of the wireless mesh network mutually exchange necessary information, for example, on the establishment of the mesh network, and share routing information on a packet transmitting route if there is a request from a client.

Because the mesh nodes of the wireless mesh network forward packets by multiple hops, erroneous routing information can be delivered by a malicious node intruding into the wireless mesh network. As a result, this prevents the mesh nodes from finding a destination node, thereby obstructing packet forwarding.

This requires hop-by-hop authentication so that the mesh node initially entering the wireless mesh network can continuously exchange information with adjacent ones of the mesh nodes after the initial authentication process of the network.

Hop-by-hop authentication in the wireless mesh network has been performed by applying authentication protocol based upon a code algorithm, such as symmetric key and public key, and schemes proposed to date to perform such authentication include a distributed authentication scheme applicable to an *ad hoc* network and a centralized authentication scheme based upon an authentication server.

First, the centralized authentication scheme will be described, wherein an authentication server, which is established in a wired network and has user specific authentication information, is connected to the master node, or the master node is internally equipped with the function of the authentication server. In addition, a first mesh node enters the wireless mesh network and performs hop-by-hop authentication with a second mesh node.

When the first mesh node newly enters the wireless mesh network, it performs hop-by-hop authentication with a searched or scanned adjacent node, for example, a second node which has a higher strength of an exchanging signal.

When the first mesh node enters the wireless mesh network, the second mesh node connects to the master node and sends an authentication request for the first mesh node to the authentication server, and the first mesh node sends an authentication request for the second mesh node to the authentication server.

The authentication server authenticates the second node and the first node, and then reports an authentication result to the first and second nodes.

That is, the authentication server reports the authentication result to the respective mesh nodes after the authentication is performed for the respective first and second nodes.

According to the distributed authentication scheme, the respective mesh nodes continuously perform hop-by-hop authentication with adjacent ones of the mesh nodes while sharing authentication information necessary for the hop-by-hop authentication.

In the centralized authentication scheme, it is required that the mesh nodes be able to connect to the authentication server constantly. In a case where hop-by-hop authentication is performed for all of the mesh nodes of the wireless mesh network, the authentication is performed in great numbers, increasing in proportion to the number of the mesh nodes, thereby sharply increasing the load on the authentication server. Furthermore, the respective mesh nodes have to first connect to the authentication server, and then request authentication for the adjacent nodes in order to perform the authentication. As a result, this causes time loss in the authentication.

In addition, since the mesh nodes are mobile, they request authentication from the authentication server at every hand-off, thereby delaying the authentication process.

In the case of the distributed authentication scheme, the respective mesh nodes do not perform authentication via the authentication server, and thus they should share authentication information of adjacent ones of the mesh nodes. However, various types of authentication algorithms used by the respective mesh nodes also increase the load on the mesh nodes for processing the authentication algorithm.

In addition, there is a practical problem as to how the respective nodes can share authentication information with adjacent ones of the nodes. Moreover, there is a security problem as to how to prevent a malicious node from entering the mesh network.

### SUMMARY OF THE INVENTION

The present invention has been developed to solve the foregoing problems of the prior art, and it is therefore an object of the present invention to provide an authentication apparatus and an authentication method in a wireless mesh network, wherein the apparatus and method can quickly perform an initial authentication process for a new node entering the wireless mesh network.

Another object of the invention is to provide an authentication apparatus and an authentication method in a wireless mesh network, wherein the apparatus and method enable authentication information of the nodes of the wireless mesh network to be shared by the nodes through the initial authentication process, thereby overcoming a problem related to authentication information sharing.

A further object of the invention is to provide an authentication apparatus and an authentication method in a wireless mesh network, wherein the apparatus and method prevent any malicious node from entering the wireless mesh network.

According to an aspect of the invention, the wireless mesh network includes a plurality of nodes and an authentication server performing an initial authentication process for the nodes of the wireless mesh network, each of the nodes performing a hop-by-hop authentication process with an adjacent one of the nodes, wherein the authentication server performs the initial authentication process based upon user identity information received from the nodes and transmits authentication information of the wireless mesh network to a verified one of the nodes, and wherein each of the nodes newly entering the wireless mesh network transmits the user identity information to the authentication server and performs the hop-by-hop authentication process based upon the authentication information received from the authentication server.

Preferably, the authentication server stores the user identity information of the verified node and the authentication information, and performs the initial authentication process based upon the user identity information received from the nodes and the stored user identity information.

Each of the nodes newly entering the wireless mesh network preferably selects the adjacent node to which it is to be wirelessly connected according to preset conditions, and transmits an initial authentication request message to the adjacent node.

Preferably, each node preferably stores path information necessary for establishment of a secure path with the authentication server and, in response to an initial authentication request message from the adjacent node, provides the secure path allowing the adjacent node to perform secure connection to the authentication server.

The authentication information is preferably set according to one of a secure socket layer, a transport layer security, a public key infrastructure, IP security, an extensible authentication protocol, an authentication algorithm defined by IEEE 802.11x, and an authentication algorithm defined by IEEE 802.11 i.

Each of the nodes preferably includes: a wireless connector for wirelessly connecting to the adjacent node; a memory for storing the authentication information received from the authentication server and the user identity information; and an authentication processor which, in the case of entering the wireless mesh network, transmits the user identity information stored in the memory to the authentication server so as to perform the initial authentication process, and performs the hop-by-hop authentication process with the adjacent node based upon the authentication information received from the authentication server.

According to another aspect of the invention, the wireless mesh network includes: a plurality of nodes; and a master node for storing user identity information of the nodes verified to enter the wireless mesh network and authentication information, and for performing an initial authentication process based upon preset user identity information received from the nodes and the stored user identity information. Each of the nodes entering the wireless mesh network transmits the preset user identity information to the master node so as to perform the initial authentication process and perform a hop-by-hop authentication process with an adjacent one of the nodes based upon the authentication information received from the master node.

The master node preferably includes: an authentication memory for storing the user identity information and the authentication information of an authentication algorithm set in the authentication server; and an authentication processor for performing the initial authentication process based upon the user identity information received from the nodes and the user identity information stored in the authentication memory, and for transmitting the user identity information stored in the memory to a corresponding one of the nodes.

According to further aspect of the invention, the authentication method in a wireless mesh network comprises the steps of: at an authenticator, storing user identity information of a plurality of nodes verified to enter the wireless mesh network, and authentication information; at the authenticator, performing an initial authentication process based upon user identity information received from each of the nodes newly entering the wireless mesh network, and the stored user identity information; and, at the each node newly entering the wireless mesh network, storing the authentication information received from the authenticator, and performing the hop-by-hop authentication process with an adjacent one of the nodes based upon the authentication information received from the authenticator.

The authentication method may further include: at the each node newly entering the wireless mesh network, storing path information of a master node if the authenticator is connected through the master node; and, at the each node newly entering the wireless mesh network, in response to an initial authentication request from the adjacent node, providing a secure path for allowing the adjacent node to perform secure connection to the authenticator.

The authentication method may further include: at each node newly entering the wireless mesh network, selecting the adjacent node to which it is to be connected according to preset conditions; of each node newly entering the wireless mesh network, transmitting an initial authentication request message, including the user identity information, to the adjacent node; and, at the adjacent node, transmitting the initial authentication request message to the authenticator through the secure path.

The step of performing the hop-by-hop authentication process may preferably include: at each node newly entering the wireless mesh network, transmitting a hop-by-hop authentication request message to the adjacent node; and, at each node newly entering the wireless mesh network, performing the hop-by-hop authentication process based upon authentication information included in an acknowledgment message received from the adjacent node, and the authentication information received from the authenticator.

The initial authentication process preferably is a centralized authentication scheme wherein the authenticator performs an authentication process for the nodes.

The hop-by-hop authentication process is preferably a distributed authentication scheme wherein each node newly entering the wireless mesh network performs an authentication process for the adjacent node.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a conceptual view of a common wireless mesh network;
FIG. 2 is a conceptual view of an authentication method in a wireless mesh network according to the invention;
FIG. 3 is a block diagram of a node according to an exemplary embodiment of the invention;
FIG. 4 is a flow diagram illustrating authentication flow in a general centralized authentication scheme;
FIG. 5 is a flow diagram illustrating authentication flow in a general distributed authentication scheme;
FIG. 6 is a flow diagram illustrating authentication flow in a wireless mesh network according to an exemplary embodiment of the invention; and
FIG. 7 is a flowchart illustrating an authentication method in a wireless mesh network according to an exemplary embodiment of the invention.

### DETAILED DESCRIPTION OF THE INVENTION

The present invention will now be described more fully with reference to the accompanying drawings, in which preferred embodiments of an authentication apparatus and an authentication method in a wireless mesh network according to the invention are shown.

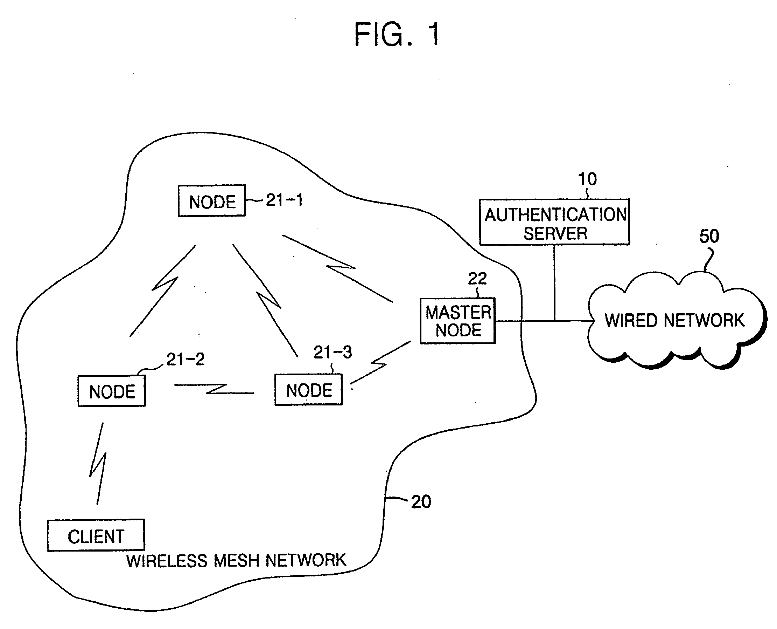

FIG. 1 is a conceptual view of a common wireless mesh network.

As shown in FIG. 1, nodes of the wireless mesh network 20 are generally divided into mesh nodes 21-1, 21-2, 21-3, etc. composing the wireless mesh network 20, and a master node 22 connected to a different network (e.g., to a wired network 50 or another mesh network) so as to function as a gateway.

The mesh nodes 21-1, 21-2, 21-3, etc. may be connected together in a multi-hop mesh structure, and the master node 22 may be connected to an authentication server (AS) 10 functioning to authenticate the mesh nodes 21-1, 21-2, 21-3, etc. when they enter the wireless mesh network 20.

For the mesh nodes 21-1, 21-2, 21-3, etc. of the wireless mesh network 20 to act as nodes in the wireless mesh network 20, two authentication stages are required, i.e., initial authentication for discerning whether or not the mesh nodes 21-1, 21-2, 21-3, etc. are verified, and hop-by-hop authentication for guaranteeing the mutual reliability of the mesh nodes 21-1, 21-2, 21-3, etc..

The mesh nodes 21-1, 21-2, 21-3, etc. of the wireless mesh network 20 mutually exchange necessary information, for example, on the establishment of the mesh network 20, and share routing information on a packet transmitting route if there is a request from a client.

Because the mesh nodes 21-1, 21-2, 21-3, etc. of the wireless mesh network 20 forward packets by multiple hops, erroneous routing information can be delivered by a malicious node intruding into the wireless mesh network 20. As a result, this prevents the mesh nodes 21-1, 21-2, 21-3, etc. from finding a destination node, thereby obstructing packet forwarding.

Hop-by-hop authentication is required so that a mesh node 21 initially entering the wireless mesh network 20 can continuously exchange information with adjacent one of the mesh nodes 21-1, 21-2, 21-3, etc. after the initial authentication process of the network 20.

Hop-by-hop authentication in the wireless mesh network 20 has been performed by applying an authentication protocol based upon a code algorithm, such as symmetric key and public key, and schemes proposed to date to perform such authentication include a distributed authentication scheme applicable to an *ad hoc* network and a centralized authentication scheme based upon an authentication server.

First, the centralized authentication scheme will be described, wherein authentication server 10, which is established in a wired network 50 and has user specific authentication information, is connected to the master node 22, or the master node 22 is internally equipped with the function of the authentication server 10. In addition, a first mesh node 21-1 enters the wireless mesh network 20 and performs hop-by-hop authentication with a second mesh node 21-2.

When the first mesh node 21-1 newly enters the wireless mesh network 20, it performs hop-by-hop authentication with a searched or scanned adjacent node, for example, the second node 21-2 which has a higher strength of an exchanging signal.

When the first mesh node 21-1 enters the wireless mesh network 20, the second mesh node 21-2 connects to the master node 22 and sends an authentication request for the first mesh node 21-1 to the authentication server 10, and the first mesh node 21-1 sends an authentication request for the second mesh node 21-2 to the authentication server 10.

The authentication server 10 authenticates the second node 21-1 and the first node 21-1, and then reports authentication result to the second node 21-2 and first node 21-1.

That is, the authentication server 10 reports the authentication result to the respective mesh nodes 21-1 and 21-2 after the authentication is performed for the first and second nodes 21-1 and 21-2, respectively.

According to the distributed authentication scheme, the respective mesh nodes 21-1, 21-2, 21-3, etc. continuously perform hop-by-hop authentication with adjacent ones of the mesh nodes 21-1, 21-2, 21-3, etc. while sharing authentication information necessary for the hop-by-hop authentication.

In the centralized authentication scheme, it is required that the mesh nodes 21 be able to connect to the authentication server 10 constantly. In a case where hop-by-hop authentication is performed for all of the mesh nodes 21-1, 21-2, 21-3, etc. of the wireless mesh network 20, the authentication is performed in great numbers, increasing in proportion to the number of the mesh nodes 21-1, 21-2, 21-3, etc., thereby sharply increasing the load on the authentication server. Furthermore, the respective mesh nodes 21 have to first connect to the authentication server 10, and then request authentication for the adjacent nodes in order to perform the authentication. As a result, this causes time loss in the authentication.

In addition, since the mesh nodes 21-1, 21-2, 21-3, etc. are mobile, they request authentication from the authentication server 10 at every hand-off, thereby delaying the authentication server 10 process.

In the case of the distributed authentication scheme, the respective mesh nodes 21-1, 21-2, 21-3, etc. do not perform authentication via the authentication server 10, and thus they should share authentication information of adjacent ones of the mesh nodes 21. However, various types of authentication algorithm used by the respective mesh nodes 21 also increase the load of the mesh nodes 21 for processing the authentication algorithm.

In addition, there is a practical problem as to how the respective nodes 21-1, 21-2, 21-3, etc. can share authentication information with adjacent ones of the nodes 21-1, 21-2, 21-3, etc.. Moreover, there is a security problem as to how to prevent a malicious node from entering the wireless mesh network 20.

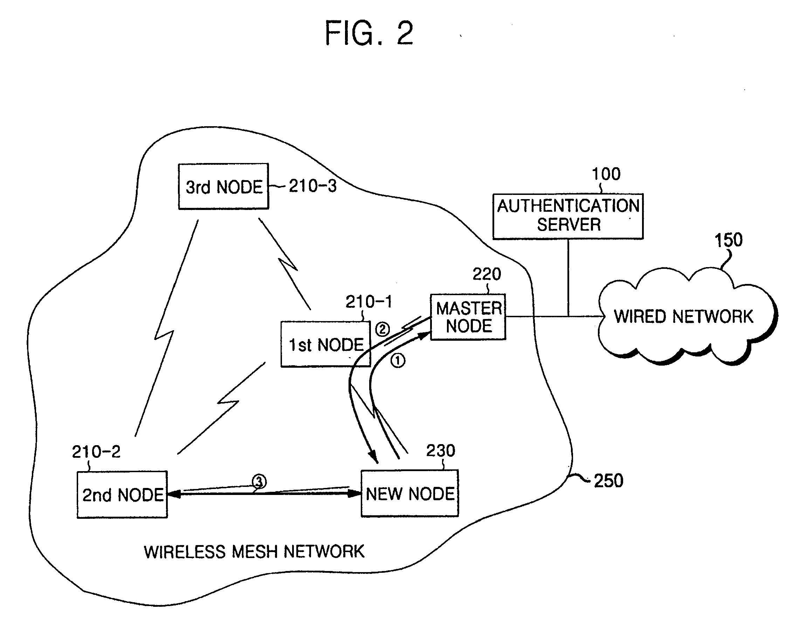

FIG. 2 is a conceptual view of an authentication method in a wireless mesh network according to the invention.

Referring to FIG. 2, a situation will be described wherein a new node 230 enters a wireless mesh network 250 composed of a master node 220 and first to third nodes 210-1, 210-2 and 210-3 respectively.

The master node 220 may be connected to the authentication server 100 and a wired network 150, or it may be internally equipped with an authentication function of the authentication server 100. As described below, the authentication server 100 is connected to the master node 220 and performs authentication for the nodes 210-1, 210-2, 210-3 of the wireless mesh network 250, or the master node 220 performs authentication for the nodes 210-1, 210-2, 210-3 of the wireless mesh network 250.

The authentication server 100 performs initial authentication for the nodes 210-1, 210-2, 210-3 of the wireless mesh network 250, stores/manages authentication information on an authentication algorithm used in the wireless mesh network 250, and provides authentication information through an initial authentication process with a new node 230.

The authentication algorithm used in the wireless mesh network 250 may be any type of wireless connection authentication algorithm, including Secure Socket Layer (SSL), Transport Layer Security (TLS), Public Key Infrastructure (PKI), IP security (IPsec), Extensible Authentication Protocol (EAP), authentication algorithm defined by Institute of Electrical and Electronics Engineers (IEEE) 802.11x, and authentication algorithm defined by IEEE 802.11i. For example, in the case of a PKI algorithm, the authentication information may be shared key information.

That is, the authentication algorithm applicable to initial and hop-by-hop authentication processes may be suitably selected from types of authentication algorithms covering entire network layers, rather than from other types of authentication algorithms covering specific layers, such as an IP layer, a transmission layer and a link layer.

Each of the nodes 210-1, 210-2, 210-3, when initially entering the network 250, receives authentication information from the authentication server 100 during initial authentication, and performs hop-by-hop authentication based upon authentication information received from adjacent ones of the nodes 210-1, 210-2, 210-3 and the authentication server 100.

The nodes 210-1, 210-2, 210-3 of the wireless mesh network 250 store identity information (e.g., path information and location information) of the master node 220 connected to the authentication server 100. In response to an initial authentication request from the new node 230, a node 210-1, 210-2, 210-3 provides a secure path so that the new node 230 can connect, by Secure Socket Layer (SSL), to the authentication server 100 through the master node 220.

As the wireless mesh network 250 is established, the authentication server 100 transmits, to nodes 210-1, 210-2, 210-3, authentication information according to an authentication algorithm which is previously set in the wireless mesh network 250 through the initial authentication with the nodes 210-1, 210-2, 210-3.

At the time of initially entering the wireless mesh network 250, the new node 230 selects an adjacent node to which it will make wireless connection. For example, the new node 230 selects a first node 210-1 based upon earlier scanning or a higher strength of exchanging signal.

When the new node 230 sends an initial authentication request for the initial authentication process to the first node 210-1, the first node 210-1 provides the secure path so that the new node 230 can connect to the authentication server 100 through the master node 220.

That is, the first node 210-1 transmits an initial authentication request for the new node 230 to the authentication server 100 connected to the master node 220.

Then, the authentication server 100 performs the initial authentication process for the new node 230 which connects, by Secure Socket Layer (SSL), to the authentication server 100 through the first node 210-1 and the master node 220.

The authentication server 100 transmits authentication information used in the wireless mesh network 250 to the new node 230 while performing the initial authentication process, based upon user identity information, on the new node 230.

When the initial authentication process by the authentication server 100 is completed, the new node 230 performs the hop-by-hop process with adjacent nodes, such as the first and second nodes 210-1 and 210-2, respectively, based upon authentication information received from the authentication server 100. That is, the new node 230 initially entering the wireless mesh network first receives authentication information through the initial authentication process with the authentication server 100 and, upon the completion of the initial authentication process, performs the hop-by-hop authentication process with the adjacent nodes based upon the authentication information received from the authentication server 100.

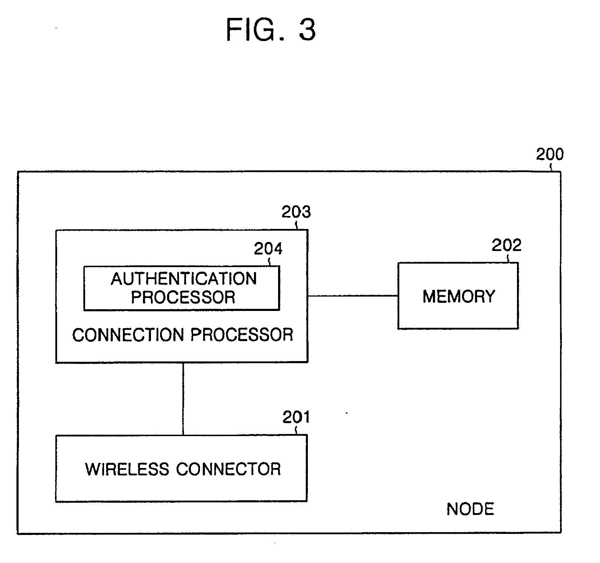

FIG. 3 is a block diagram of a node according to an exemplary embodiment of the invention.

Referring to FIG. 3, the node 200 of the invention includes a wireless connector 201 for enabling wireless connection with an adjacent node or a client (not shown), a connection processor 203 for providing a wireless network service to the client via the adjacent node after the node 200 enters a wireless mesh network, and a memory 202 for storing authentication information, node specific user identity information, operation program information and an authentication algorithm received from the authentication server 100 through the initial authentication process. The connection processor 203 includes an authentication processor 204 for performing the authentication process according to the authentication algorithm.

The node 200 of the invention may be the mesh node 210-1, 210-2, 210-3 composing the wireless mesh network 250 of FIG. 2, and may be the master node 220 of FIG. 2 connected to the authentication server 100 or performing the authentication function.

First, the mesh node 200 and components thereof will be described.

When the node 200 newly enters the wireless mesh network 250, the connection processor 203 selects one of adjacent nodes wirelessly, connected via the wireless connector 201, based upon earlier scanning or a higher strength of exchanging signal.

Then, the authentication process 204 of the connection processor 203 transmits an initial authentication request message to the selected node, requesting the initial authentication process to be carried out.

After the initial authentication request message is transmitted to the authentication server 100, the authentication processor 204 transmits user identity information, stored in the memory 202, to the authentication server 100 through the initial authentication process.

Upon completion of the initial authentication process with the authentication server 100, the authentication processor 204 transmits a hop-by-hop authentication request message to the adjacent nodes, and performs a hop-by-hop authentication process based upon authentication information received from the authentication server 100.

When the authentication processor 204 receives an initial authentication request message from an adjacent node, the authentication processor 204 provides a secure path for secure connection between the authentication server 100 connected to the master node 220 and the adjacent node based upon identity information of the master node 220.

Now, components of the master node 220 equipped with an authentication function will be described.

The memory 202 of the master node 220 stores user identity information of verified nodes capable of entering the wireless mesh network 250 and authentication information of the nodes 210-1, 210-2, 210-3 of the wireless mesh network 250.

The authentication processor 204, upon receiving an initial authentication request message from an adjacent node, performs an initial authentication process by discerning whether or not user identity information received from the adjacent node is verified. If the user identity information of the adjacent node is verified, authentication processor 204 transmits authentication information, stored in the memory 202, to the adjacent node.

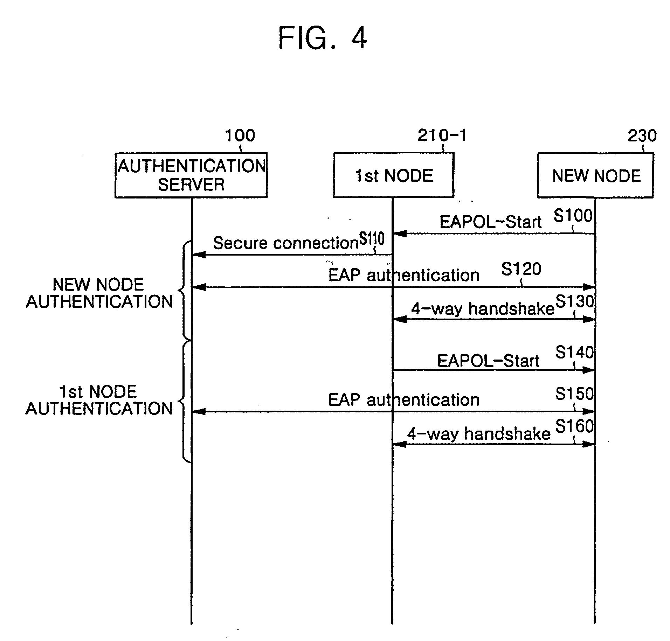

FIG. 4 is a flow diagram illustrating authentication flow in a general centralized authentication scheme.

Referring to FIG. 4, authentication flow performed by the new node 230 entering the wireless mesh network 250 and the first node 210-1 adjacent to the new node 230 according to Extensible Authentication Protocol Over LAN (EAPOL) will be described.

As the new node 230 newly enters the wireless mesh network, it transmits an EAPOL-start message to the first node 210-1 adjacent to the new node 230, requesting network connection (step S100).

When the EAPOL-start message from the new node 230 is received, the first node 210-1 enables secure connection so that the authentication server 100 connected to the master server 220 can perform an authentication process for the new node 230 (step S 110).

The authentication server 100 receives user identity information from the new node 230, connected thereto through a secure path provided by the first node 210-1, thereby performing the authentication process (i.e., EAP authentication) for the new node 230 (step S120).

When the authentication process for the new node 230 is completed, the authentication server 100 reports an authentication result for the new node 230 to the first node 210-1, which then performs a wireless connection procedure (i.e., handshake) for the new node 230 (step S 130).

The first node 210-1 then transmits an EAPOL-start message for wireless connection to the new node 230 (step S140).

When the EAPOL-start message is received from the first node 210-1, the new node 230 sends an authentication request message to the authentication server 100 connected to the master node 220, requesting authentication for the first node 210-1 and, with user identity information received from the first node 210-1, the authentication server 100 performs the authentication process for the first node 210-1 (step S 150).

When the authentication process for the first node 210-1 is completed, the authentication server 100 reports an authentication result for the first node 210-1 to the new node 230, which then performs a wireless connection procedure (i.e., handshake) for the first node 210-1 (step S160).

As described above, the general centralized authentication scheme takes a long authentication time, and suffers from authentication delay because the authentication processes for the two nodes are performed separately.

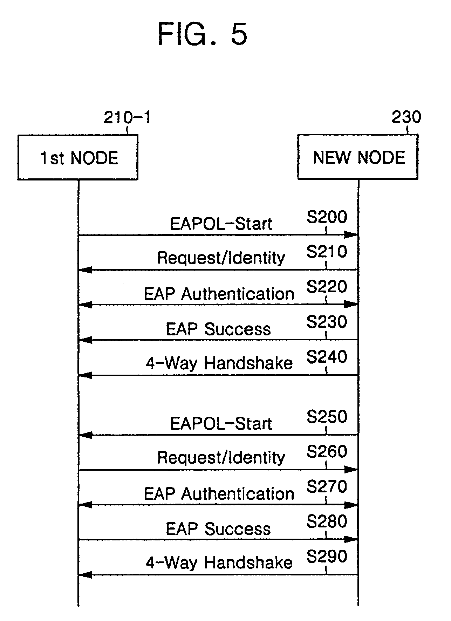

FIG. 5 is a flow diagram illustrating authentication flow in a general distributed authentication scheme.

Referring to FIG. 5, when the new node 230 newly enters the wireless mesh network 250, the first node 210-1 transmits an EAPOL-start message to the new node 230, requesting network connection (step S200).

As an acknowledgment to the received EAPOL-start message, the new node 230 transmits a Request/Identity message, including authentication information, to the first node 210-1 (step S210).

The first node then performs an authentication process for the new node 230 based upon authentication information thereof (step S220).

Upon accomplishment of the authentication process for the new node 230, the first node 210-1 notifies the new node 230 of authentication or EAP success (step S230).

The first node 210-1 also performs a wireless connection procedure (i.e., handshake) for the new node 230 (step S240).

Then, the new node 230 transmits an EAPOL-start message to the first node 210-1, requesting network connection (step S250), receives a Request/Identity message including authentication information from the first node 210-1 (step S260), and performs an authentication process for the first node 210-1 (step S270).

Upon accomplishment of the authentication process for the first node 210-1, the new node 230 notifies the first node 210-1 of authentication or EAP success (step S280), and performs a wireless connection procedure (i.e., handshake) for the first node 210-1 (step S290).

In this distributed authentication scheme, the first node 210-1 and the new node 230 are required to have authentication information of the counterpart. However, various types of authentication algorithms used by the respective nodes increase the load on the nodes for processing the authentication algorithm, as well as raise a practical problem of how to share authentication information.

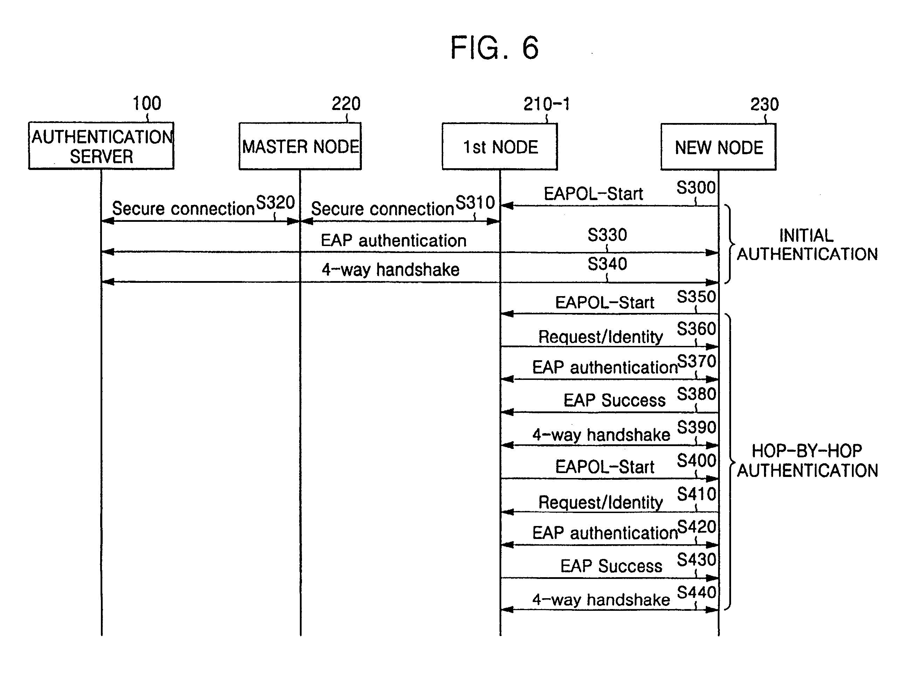

FIG. 6 is a flow diagram illustrating authentication flow in a wireless mesh network according to an exemplary embodiment of the invention.

Referring to FIG. 6, when the new node 230 newly enters the wireless mesh network 250, it transmits an EAPOL-start message to the adjacent first node 210-1, requesting network connection (step S300).

When the EAPOL-start message is received from the new node 230, the first node 210-1 performs secure connection with the master node 220 connected to the authentication server 100 so as to provide a secure path (step S310), and the master node 220 performs secure connection with the connected authentication server 100 (step S320).

The new node 230, upon connecting to the authentication server 100 through the secure path provided by the first node 210-1 and the master node 220, transmits user identity information to the authentication server 100, which then performs an initial authentication process (i.e., EAP authentication) to verify user identity information of the new node 230 (step S330).

When user identity information of the new node 230 is verified, the authentication server 100 performs a negotiation procedure (i.e., 4-way handshake), allowing the new node 230 to connect to the wireless mesh network (step S340).

When user identity information of the new node 230 is verified, the authentication server 100 transmits authentication information of the respective nodes 210-1, 210-2, 210-3 of the wireless mesh network 250 to the new node 230.

The new node 230 stores authentication information received in the initial authentication process, wherein user identity information is verified by the authentication server 100, and, when the initial authentication process with the authentication server 100 is completed, new node 230 transmits an EAPOL-start message to the adjacent first node 210-1, requesting network connection (step S350).

As an acknowledgment upon receipt of the EAPOL-start message, the first node 210-1 transmits a Request/Identity message including authentication information to the first node 230 (step S360).

Then, the new node 230 performs a hop-by-hop authentication process based upon received authentication information of the first node 210-1 (step S370).

The new node 230 also notifies the first node 210-1 that the hop-by-hop authentication process for the first node 210-1 is accomplished successfully by transmitting an EAP success message to the first node 210-1 (step S380).

The new node 230 then performs a wireless connection procedure (handshake) with the first node 210-1 (step S390).

Then, the first node 210-1 transmits an EAPOL-start message to the new node 230 requesting network connection (step S400), receives a Request/Identity message including authentication information from the new node 230 (step S410), and performs a hop-by-hop authentication process for the new node 230 (step S420).

When the hop-by-hop authentication process for the new node 230 is accomplished successfully, the first node 210-1 notifies the new node 230 of authentication or EAP success (step S430), and performs a wireless connection or handshake procedure (step S440).

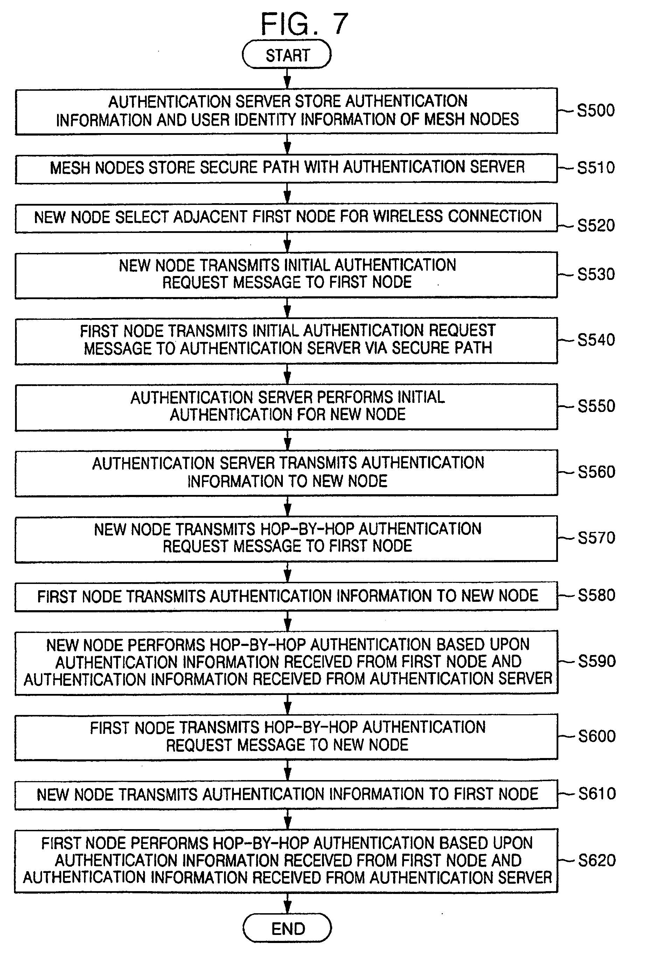

FIG. 7 is a flowchart illustrating an authentication method in a wireless mesh network according to an exemplary embodiment of the invention.

Referring to FIG. 7, the authentication server 100 performing authentication for the nodes of the wireless mesh network 250 stores authentication information and user identity information of the nodes (step S500).

The nodes of the wireless mesh network 250 store identity information (e.g., path information and location information) of the master node 220 connected to the authentication server (step S510).

The new node 230, newly entering the wireless mesh network 250, selects an adjacent node for wireless connection (step S520). For example, the new node 230 selects a node (e.g., the first node 210-1) based upon earlier scanning or a higher strength of exchanging signal.

The new node 230 transmits an initial authentication request message including user identity information to the first node 210-1 (step S530).

When the initial authentication request message is received from the new node 230, the first node 210 provides a secure path, which allows the initial authentication request message received from the first node 210-1 to be transmitted to the authentication server 100, based upon stored identity information of the master node 220 (step S540).

The authentication server 100 performs an initial authentication process, discerning whether or not the new node 230 is verified, based upon user identity information included in the initial authentication request message received from the new node (step S550).

Accordingly, the authentication server 100 can acquire initial reliability about the nodes of the wireless mesh network 250 by performing the initial authentication process. The authentication server 100 can also prevent malicious nodes from entering the wireless mesh network 250 by performing the initial authentication process based upon user identity information of the verified nodes.

The authentication server 100 transmits authentication information of the respective nodes 210-1, 210-2, 210-3 of the wireless mesh network 250 to the new node 230 during the initial authentication process (step S560).

Accordingly, the nodes 210-1, 210-2, 210-3 of the wireless mesh network 250 can continuously receive authentication information, necessary for the hop-by-hop authentication process with adjacent nodes, from the authentication server 100, and thus can quickly perform the hop-by-hop authentication process in a distributed authentication scheme. Furthermore, the distribution (sharing) of authentication information can be realized simply because the authentication server 100 distributes authentication information to the nodes 210-1, 210-2, 210-3.

When the initial authentication process with the authentication server 100 is completed, the new node 230 transmits a hop-by-hop authentication request message to the adjacent first node 210-1 (step S570).

The first node 210-1, upon receiving the hop-by-hop authentication request message, transmits an acknowledgment message including authentication information to the new node 230 (step S580).

The new node 230 performs the hop-by-hop authentication process based upon authentication information received from the first node 210-1 and authentication information received from the authentication server 100 (step S590).

The first node 210-1 then transmits a hop-by-hop authentication request message to the new node 230 in order to continuously confirm authentication with the new node 230 (step S600).

The new node 230, upon receiving the hop-by-hop authentication request message from the first node 210-1, transmits an acknowledgment message, including authentication information received from the authentication server 100, to the first node 210-1 (step 5610).

The first node 210-1 then performs the hop-by-hop authentication process for the new node 230 based upon authentication information included in the acknowledgment message received from the new node 230 and authentication information received from the authentication server 100 (step S620).

While a detailed description of the present invention has been made with respect to, for example, the authentication server 100 or the master node 220 functioning to authenticate (verify) the nodes 210-1, 210-2, 210-3 of the wireless mesh network 250 when they newly enter the wireless mesh network 250, the present invention may adopt other means for authenticating the newly entering nodes.

Furthermore, while a detailed description of the present invention has been made with respect to, for example, the authentication process performed according to EAPOL, the present invention may adopt other methods to perform the authentication process.

As set forth above, the present invention allows the initial authentication process for the node newly entering the wireless mesh network to be performed between the authentication server and the new node, thereby minimizing time loss during the authentication process.

Furthermore, since the authentication server allows authentication information of the nodes of the wireless mesh network to be shared by the nodes through the initial authentication process, the problem of the hop-by-hop authentication associated with authentication information sharing can be overcome.

Moreover, since the authentication server performs the initial authentication process based upon user identity information of the verified nodes, it is possible to prevent any malicious node from entering the wireless mesh network.

While the present invention has been shown and described in connection with the preferred embodiments, it will be apparent to those skilled in the art that modifications and variations can be made without departing from the spirit and scope of the invention as defined by the appended claims.

## Claims

1. A wireless mesh network, comprising:
a plurality of nodes; and
an authentication server for performing an initial authentication process for the nodes of the wireless mesh network, each of the nodes performing a hop-by-hop authentication process with an adjacent node;
wherein the authentication server performs the initial authentication process based upon user identity information received from the nodes, and transmits authentication information of the wireless mesh network to a verified one of the nodes, and
wherein each of the nodes newly entering the wireless mesh network transmits the user identity information to the authentication server, and performs the hop-by-hop authentication process based upon the authentication information received from the authentication server.

2. The wireless mesh network according to claim 1, wherein the authentication server stores user identity information of a verified node and the authentication information, and performs the initial authentication process based upon the user identity information received from the nodes and the stored user identity information.

3. The wireless mesh network according to claim 1, wherein each node newly entering the wireless mesh network selects an adjacent node to which it is to be wirelessly connected according to preset conditions, and transmits an initial authentication request message to the adjacent node.

4. The wireless mesh network according to claim 3, wherein said each node newly entering the wireless mesh network stores path information necessary for establishment of a secure path with the authentication server and, in response to an initial authentication request message from the adjacent node, provides the secure path allowing the adjacent node to perform secure connection to the authentication server.

5. The wireless mesh network according to claim 1, wherein the authentication information is set according to one of a secure socket layer, a transport layer security, a public key infrastructure, an IP security, an extensible authentication protocol, an authentication algorithm defined by IEEE 802.11x, and an authentication algorithm defined by IEEE 802.11i.

6. The wireless mesh network according to claim 1, wherein each node includes:
a wireless connector for wirelessly connecting with the adjacent node;
a memory for storing the authentication information received from the authentication server and the user identity information; and
an authentication processor responsive to a mode entering the wireless mesh network for transmitting the user identity information, stored in the memory, to the authentication server so as to perform the initial authentication process, and for performing the hop-by-hop authentication process with the adjacent node based upon the authentication information received from the authentication server.

7. A wireless mesh network, comprising:
a plurality of nodes; and
a master node for storing user identity information of nodes verified to enter the wireless mesh network and authentication information, and for performing an initial authentication process based upon preset user identity information received from the nodes and the stored user identity information,
wherein each node entering the wireless mesh network transmits the preset user identity information to the master node so as to perform the initial authentication process, and so as to perform a hop-by-hop authentication process with an adjacent node based upon the authentication information received from the master node.

8. The wireless mesh network according to claim 7, wherein the master node includes:
an authentication memory for storing the user identity information and
authentication information of an authentication algorithm set in an authentication server; and
an authentication processor for performing the initial authentication process based upon the user identity information received from the nodes and the user identity information stored in the authentication memory, and for transmitting the user identity information stored in the memory to a corresponding one of the nodes.

9. An authentication method in a wireless mesh network, comprising the steps of:
storing, at an authenticator, user identity information of a plurality of nodes verified to enter the wireless mesh network and authentication information;
performing, at the authenticator, an initial authentication process based upon user identity information received from each node newly entering the wireless mesh network and the stored user identity information; and
at said each node newly entering the wireless mesh network, storing the authentication information received from the authenticator, and performing the hop-by-hop authentication process with an adjacent node based upon the authentication information received from the authenticator.

10. The authentication method according to claim 9, further comprising the steps of:
storing, at said each node newly entering the wireless mesh network, path information of a master node when the authenticator is connected through a master node; and
providing, at said each node newly entering the wireless mesh network, in response to an initial authentication request from the adjacent node, a secure path for allowing the adjacent node to perform secure connection to the authenticator.

11. The authentication method according to claim 9, further comprising the steps of:
selecting, at said each node newly entering the wireless mesh network, the adjacent node to which it is to be wirelessly connected according to preset conditions;
at said each node newly entering the wireless mesh network, transmitting to the adjacent node an initial authentication request message including the user identity information; and
at said adjacent node, transmitting to the authenticator the initial authentication request message through the secure path.

12. The authentication method according to claim 9, wherein the step of performing the hop-by-hop authentication process comprises:
at said each node newly entering the wireless mesh network, transmitting to the adjacent node a hop-by-hop authentication request message; and
performing, at said each node newly entering the wireless mesh network, the hop-by-hop authentication process based upon authentication information included in an acknowledgment message received from the adjacent node and the authentication information received from the authenticator.

13. The authentication method according to claim 9, the initial authentication process being a centralized authentication scheme wherein the authenticator performs an authentication process for the nodes.

14. The authentication method according to claim 9, wherein the hop-by-hop authentication process is a distributed authentication scheme, wherein said each node newly entering the wireless mesh network performs an authentication process for the adjacent node.
